# EUROPEAN PATENT APPLICATION

(11) **EP 1 406 428 A1**
(43) Date of publication of application: **07.04.2004**
(21) Application number: 03008368.7
(22) Date of filing: 10.04.2003
(51) Int. Cl.: H04M 1/725, H04Q 7/32, H04Q 7/22

(54) **Message managing method in a mobile terminal**

(71) Applicant: SIEMENS AKTIENGESELLSCHAFT, 80333 München (DE)
(72) Inventor: Bàràny, Vince, 1126 Budapest (HU)

(57) **Abstract**

The invention relates to a method for managing messages in a mobile terminal. The method comprises the steps of: receiving (5) at least one message in the mobile terminal (1), displaying the message on the display (2) of the mobile terminal (1), classifying the message as forgettable if the displaying of the message is ended without a manual save instruction by the user of the mobile terminal, storing the message in a memory associated with the mobile terminal (1), and automatically deleting the message which was classified forgettable from the memory after a timeout period has expired.

## Description

The invention relates to a method for managing messages in a mobile terminal.

Such a method can be employed for example in a mobile phone.

Overcrowded message boxes are a constant problem in lightweight systems having limited memory resources like mobile phones or personal digital assistants (PDAs). For example, many users of the Short Message Service (SMS) in the GSM (Global System for Mobile Communications) system receive more than 50 SMS messages per day, whereupon the capacity of the message box in many mobile phones is only suitable for ten SMS messages to be stored.

Users of such devices having limited memory capacity regularly have to browse through their messages, view them one by one for filtering out those, which can be deleted in order to provide memory space for new messages to be received. This procedure is a very time-consuming task, requiring many user actions like selecting and viewing every single message, deleting and confirming the ones not needed anymore, etc.

The only time-effective solution known for providing additional memory space in mobile terminals is to delete all messages in a message box with one command. However, this is no desirable solution if the user wishes to keep important messages in his message box.

Therefore, it is an object of the invention to provide a time-effective and user-friendly method for managing messages in a mobile terminal.

This object is solved by a method for managing messages in a mobile terminal comprising the features of claim 1. The dependent claims represent preferred and advantageous embodiments of the invention.

The method for managing messages in a mobile terminal comprises the steps of:
receiving at least one message in the mobile terminal,
displaying the message on the display of the mobile terminal,
classifying the message as forgettable if the displaying of the message is ended without a manual save instruction by the user of the mobile terminal,
storing the message in a memory associated with the mobile terminal, and
automatically deleting the message which was classified forgettable from the memory after a timeout period has expired.

The messages to be received in the mobile terminal can be any kind of data which can be send from a mobile terminal to another mobile terminal like for example a SMS, a MMS (Multimedia Message, Service), email, video mail, voice mail or a sound file. In case, just a sound file is sent to the mobile terminal, the displaying of the message also covers playing the sound file on a loudspeaker.

The mobile terminal can be any portable device being able to receive messages, like for example mobile phones, PDAs or Pager. The message is stored in a memory associated to the mobile terminal. The message can be either stored in a memory integrated in the mobile terminal or in an external memory, like for example a SIM (Subscriber Identification Module)-Card.

In one embodiment of the invention, the message is classified as to be stored without deleting if the displaying of the message is ended with a manual save instruction by the user of the mobile terminal. Preferably, the message classified as to be stored without deleting can only be deleted manually by the user.

In a further embodiment of the invention, the message which was classified as forgettable is stored in a first-in-first-out (FIFO) memory. In a FIFO memory, the older messages are deleted first. Therefore, the messages which are classified as forgettable are deleted automatically after they were shifted through the FIFO memory.

In another embodiment of the invention, the user can determine the timeout period. The user may input the timeout period in his mobile terminal in the settings options so that messages which were classified as forgettable will be deleted after termination of the timeout period at the latest. It is also possible that the timeout period is pre-set in the mobile terminal, so that the manufacturer may determine the timeout period.

In still another embodiment of the invention, messages reporting the status of sent messages are automatically classified as forgettable. Such a status reported by a message can be that a message was successfully delivered to the recipient, a message was read by the recipient or a message did not reach the recipient. Preferably, messages reporting the status of sent messages are deleted earlier than the message classified as forgettable if the displaying of the message is ended without a manual save instruction by the user of the mobile terminal. Messages reporting the status of sent messages should have the lowest priority and should therefore be deleted even before older messages which were automatically classified as forgettable after being displayed.

Preferably, the classification as forgettable can be deleted by the user. If the user changes his mind and wants to keep a certain message in memory which was already classified as forgettable, he may change the classification. He may also change a message which was saved for permanent storage to the forgettable status.

The present invention also relates to a mobile terminal suitable to be used in a method according to the present invention. The mobile terminal can be any portable device being able to receive messages, like for example mobile phones, PDAs or Pager.

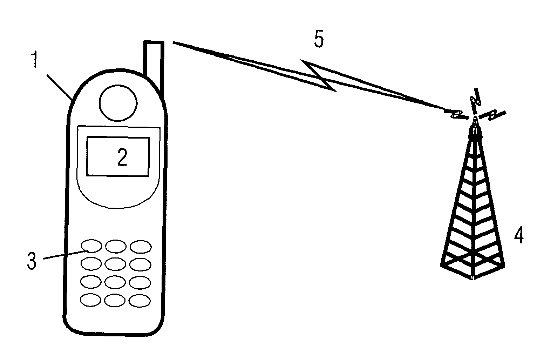

The invention is described in more detail below with reference to the enclosed drawing, in which
Figure 1 shows a schematic diagram of a mobile phone in communication with a base station.

In Figure 1, the mobile phone 1 comprises a display 2 and a keyboard 3. A base station 4 sends a SMS message 5 to the mobile phone 1. The SMS message is displayed on the display 2, the user of the mobile phone reads this message and exits the SMS viewer without saving the message, i.e. the displaying of the message is ended without a manual save instruction. The message is automatically marked as forgettable and the user does not have to delete it manually. This automatic deletion is fine for him, since he only wanted to read the information once. Experience shows that most messages are only read once and are not required anymore thereafter.

Later, a second message is sent from the base station 4 to the mobile phone 1. The user replies to this message. Accordingly, the message received is automatically marked as forgettable. The reply message sent to the base station 4 and a report message informing about the successful delivery of the reply is as well marked as forgettable.

Still later, a third message is sent from the base station 4 to the mobile phone 1. The user saves this message and closes the message viewer because he requires the information contained in the message later.

The mobile phone 1 now stores one saved message, two messages classified as forgettable and one report message classified as forgettable.

The user has manually set the time period for storing messages which were marked as forgettable to three days. Therefore, after three days, these messages will be deleted automatically without any further action required by the user. The mailbox of the mobile phone 1 can only store 20 messages.

If the mobile phone 1 receives more than 20 messages, the messages marked as forgettable will be deleted subsequently in first-in-first-out order, since the memory where the messages are stored is a FIFO memory.

For this message management according to the invention, the user only had to mark the single SMS he wanted to be saved and did not have to pay attention to the other messages after reading.

On a black/white display 2, forgettable messages are shown in gray and saved messages are shown in black. On color displays 2, the color intensity of a message refers to the age of the message. For example, the color intensity of a messages which was classified as forgettable is fading away with time until it is finally deleted.

The present invention is based on the observation that most messages can be disregarded after having been seen once by the user. The invention offers a more comfortable and natural use of a messaging user interface and helps the user to manage the inbox of a mobile terminal in a simple and time-effective way.

## Claims

1. A method for managing messages in a mobile terminal comprising the steps of:
receiving (5) at least one message in the mobile terminal (1) ;
displaying the message on the display (2) of the mobile terminal (1);
classifying the message as forgettable if the displaying of the message is ended without a manual save instruction by the user of the mobile terminal;
storing the message in a memory associated with the mobile terminal (1); and
automatically deleting the message which was classified as forgettable from the memory after a timeout period has expired.

2. A method according to claim 1, wherein the message is classified as to be stored without deleting if the displaying of the message is ended with a manual save instruction by the user of the mobile terminal.

3. A method according to claim 2, wherein the message classified as to be stored without deleting can only be deleted manually by the user.

4. A method according to any of the preceding claims, wherein the message which was classified as forgettable is stored in a FIFO memory.

5. A method according to any of the preceding claims, wherein the user can determine the timeout period.

6. A method according to any of the preceding claims, wherein messages reporting the status of sent messages are automatically classified as forgettable.

7. A method according to claim 6, wherein the messages reporting the status of sent messages are deleted earlier than the message classified as forgettable if the displaying of the message is ended without a manual save instruction by the user of the mobile terminal.

8. A method according to any of the preceding claims, wherein the classification as forgettable can be deleted by the user.

9. A mobile terminal suitable to be used in a method according to any of the preceding claims.
